Europäisches Patentamt

European Patent Office

Office européen des brevets

(19)

(11) Numéro de publication: **0 249 265**
**A1**

## (12) DEMANDE DE BREVET EUROPEEN

(21) Numéro de dépôt: **87200928.7**

(22) Date de dépôt: **19.05.87**

(51) Int. Cl.⁴: **G01S 15/89** , G01S 7/52

(30) Priorité: **27.05.86 FR 8607539**

(43) Date de publication de la demande:
**16.12.87 Bulletin 87/51**

(84) Etats contractants désignés:
**BE DE FR GB SE**

(71) Demandeur: **Laboratoires d'Electronique et de Physique Appliquée L.E.P.**
**3, Avenue Descartes**
**F-94450 Limeil-Brévannes(FR)**

(84) **FR**

(71) Demandeur: **N.V. Philips' Gloeilampenfabrieken**
**Groenewoudseweg 1**
**NL-5621 BA Eindhoven(NL)**

(84) **BE DE GB SE**

(72) Inventeur: **Nicolas, Jean-Marie Société Civile S.P.I.D.**
**209, rue de l'Université**
**F-75007 Paris(FR)**

(74) Mandataire: **Landousy, Christian et al Société Civile S.P.I.D. 209, Rue de l'Université**
**F-75007 Paris(FR)**

(54) **Appareil d'examen de milieux par échographie ultrasonore.**

(57) Appareil d'examen de milieux par échographie ultrasonore comprenant un transducteur ultrasonore (10) associé à un étape (20) d'émission répétée d'ondes ultrasonores vers le milieu à explorer et à un étage (30) de réception des échos renvoyés vers le transducteur par les obstacles rencontrés par ces ondes dans ledit milieu. L'étage de réception comprend lui-même un dispositif (110) de transformation de signal échographique par calcul de la transformée de Fourier inverse de la transformée de Mellin de ce signal, un dispositif (120) de calcul de fonction de correction par transformation de fonction d'atténuation, un dispositif (130) de convolution, et un dispositif (140) de traitement du signal de sortie de ce dispositif de convolution, pour la restitution d'images et/ou d'informations représentatives de ladite région explorée.
Application : Echographes utilisé en médecine

FIG.1

## APPAREIL D'EXAMEN DE MILIEUX PAR ECHOGRAPHIE ULTRASONORE

La présente invention concerne un appareil d'examen de milieux et notamment de tissus biologiques par échographie ultrasonore, comprenant au moins un transducteur ultrasonore associé à un étage d'émission répétée d'ondes ultrasonores vers le milieu à explorer et à un étage de réception des échos renvoyés vers le transducteur par les obstacles rencontrés par ces ondes dans ledit milieu.

Le brevet des Etats-Unis d'Amérique US-A-4016750 décrit un échographe ultrasonore comprenant, de façon classique, un transducteur ultrasonore associé à un étage d'émission d'ondes ultrasonores et à un étage de réception d'échos comprenant, pour la restitution d'images représentatives de régions du milieux exploré, un circuit d'affichage. Entre le transducteur et ce circuit d'affichage sont prévus un certain nombre de circuits intermédiaires, dont un dispositif composé d'une part d'un amplificateur à gain variable et d'autre part d'un filtre variable. Cet amplificateur et ce filtre assurent respectivement la correction du gain et la correction des caractéristiques de filtrage en fonction de la distance parcourue par les ondes ultrasonores dans le milieu exploré.

Le but de l'invention est également de proposer un échographe ultrasonore corrigeant la diminution de l'intensité du signal ultrasonore et l'atténuation sélective des hautes fréquences avec la distance parcourue, mais dont la structure et le fonctionnement sont fondamentalement différents de ceux qui apparaissent dans le document cité.

A cet effet, l'appareil d'examen selon l'invention est caractérisé en ce que l'étage de réception comprend lui-même :

(A) un dispositif de transformation de signal échographique, par calcul de la transformée de Fourier inverse de la transformée de Mellin de ce signal ;

(B) un dispositif de calcul de fonction de correction par transformation de fonction d'atténuation, opérant par calcul de la transformée de Fourier inverse de la valeur inverse de la transformée de Mellin de la fonction d'atténuation associée à une valeur d'atténuation correspondant à au moins une région du milieu à explorer ;

(C) un dispositif de convolution composé en série :

(1) d'un circuit de convolution des sorties respectives des dispositifs de transformation prévus en (A) et (B) ;

(2) d'un circuit de transformation du signal ainsi obtenu par calcul inverse du calcul effectué par le dispositif de transformation de signal échographique ;

(D) un dispositif de traitement du signal de sortie de ce dispositif de convolution, pour la restitution d'images et/ou d'informations représentatives de ladite région explorée.

La structure ainsi proposée repose sur le principe suivant, à savoir qu'une correction globale des deux effets pernicieux de l'atténuation est effectivement obtenue par la réalisation pratique, dans l'étage de réception de l'appareil, d'une approximation de la transformation mathématique inverse de la transformation intégrale dite convolution de Mellin (cette transformation intégrale est étudiée dans l'article "Tissue ultrasonic attenuation well modelized by a Mellin-convolution" de M. Auphan et J.M. Nicolas paru dans Acoustical Imaging, vol.12, édité par Plenum Publishing Corporation, 1982).

D'autres particularités et avantages de l'invention apparaîtront en outre dans la description qui suit et dans les dessins annexés, données à titre d'exemple non limitatifs et dans lesquels :

-la figure 1 montre un exemple de réalisation de l'appareil selon l'invention ;

-la figure 2 montre un mode de réalisation particulier du dispositif de transformation de signal échographique, et les figures 3 à 5 des variantes de réalisation de ce dispositif ;

-la figure 6 montre un mode de réalisation particulier du dispositif de transformation de fonction d'atténuation ;

-la figure 7 montre dans le dispositif de traitement un mode .de .réalisation particulier du circuit de transformation par calcul inverse, et les figures 8 et 9 deux variantes de ce circuit ;

-la figure 10 montre une variante de réalisation du dispositif de transformation de fonction d'atténuation et du dispositif de traitement.

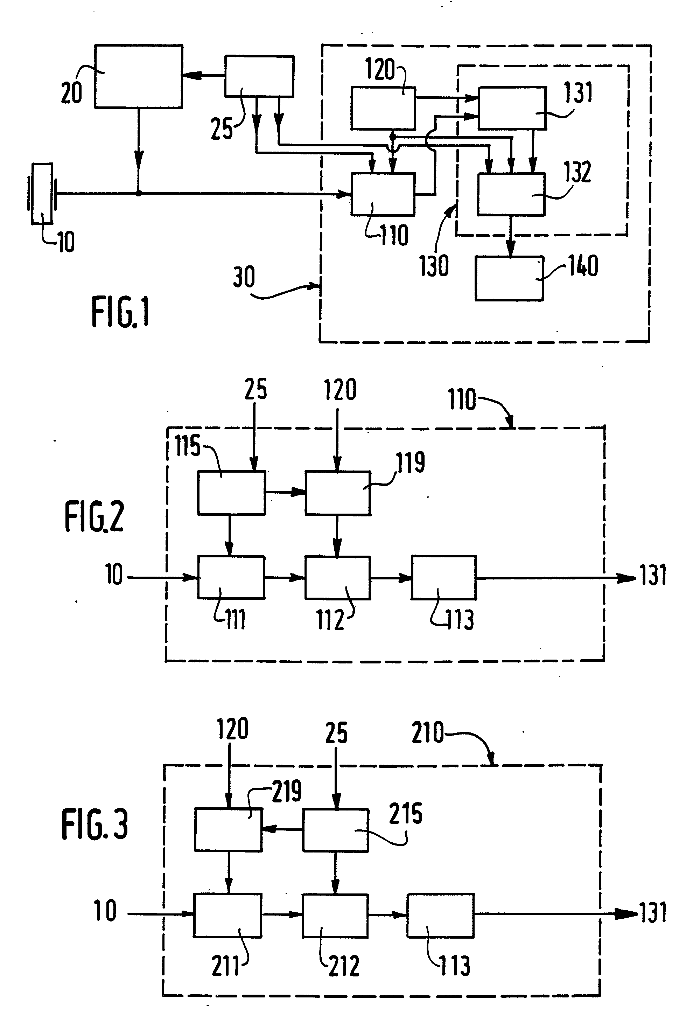

L'appareil représenté sur la figure 1 comprend un transducteur ultrasonore 10 qui, dans l'exemple ici décrit, est destiné à permettre à la fois l'émission d'ondes ultrasonores vers le milieu à examiner par échographie et la réception des échos renvoyés vers lui par les obstacles rencontrés par ces ondes dans la région effectivement explorée. Bien entendu, pour un déroulement satisfaisant de cet examen, un milieu intermédiaire de transmission est prévu entre le transducteur et la région explorée, mais pour la simplification de la figure ni ladite région ni ce milieu de couplage intermédiaire ne sont représentés. Par ailleurs, on n'utilise dans le cas présent qu'un seul transducteur ultrasonore, mais l'invention peut être mise en oeuvre de la même manière lorsqu'on utilise des dispositifs tels que sondes, barrettes, réseaux de transducteurs élémentaires pour réaliser les fonctions de conversion d'énergie électrique en énergie ultrasonore et réciproquement.

Les ondes ultrasonores fournies par le transducteur en mode émetteur correspondent à des signaux électriques délivrés par un étage d'émission 20. Cet étage 20 commande de façon classique - et donc non décrite en détail ici - une émission répétée, engénéral périodique, des ondesvers le milieu à explorer. La fréquence de cette émission est couramment comprise entre 1 et 5 kilohertz, et celle des ondes ultrasonores entre 1 et 10 mégahertz, ces indications ne constituant cependant pas des limites impératives. Les échos ultrasonores renvoyés par les différents obstacles éventuellement rencontrés par les ondes ultrasonores dans la région explorée sont alors reçus par le transducteur 10 en mode récepteur qui, lui-même, fournit à un étage de réception 30 les signaux électrique correspondant à ces échos.

Un circuit d'interface non représenté peut être inséré entre le transducteur 10, l'étage d'émission 20 et l'étage de réception 30, notamment pour éviter l'aveuglement de ce dernier par l'étage d'émission. On a par contre représenté, et désigné par la référence 25, le circuit d'horloge qui contrôle le fonctionnement séquentiel des étages, de tels circuits d'horloge étant cependant déjà connus et réalisés dans de nombreux appareils d'échographie, et notamment dans le document cité précédemment.

Conformément à l'invention, l'étage de réception 30 de l'appareil comprend un certain nombre de circuits spécifiques qui sont les suivants : un dispositif 110 de transformation de signal échographique, destiné à calculer la transformée de Fourier inverse de la transformée de Mellin de ce signal, un dispositif 120 de calcul de fonction de correction par transformation de fonction d'atténuation, destiné à calculer la valeur de la fonction de correction d'atténuation associée à une valeur d'atténuation déterminée (précisée ci-dessous), un dispositif de convolution 130, destiné à délivrer un signal échographique corrigé en ce qui concerne l'atténuation, et un dispositif de traitement 140 du signal de sortie du dispositif 130.

Le dispositif de convolution 130 comprend lui-même un circuit 131 de convolution des sorties respectives des dispositifs de transformation 110 et de calcul 120 et un circuit 132 de transformation du signal ainsi obtenu par calcul inverse du calcul effectué par le dispositif 110.

Dans le cas présent, le dispositif de traitement 140 est un dispositif de visualisation, mais ce pourrait être également, selon l'utilisation envisagée, tout autre dispositif capable de convertir les signaux de sortie du circuit 132 en informations qualitatives ou quantitatives. En effet, selon la volonté de l'opérateur, on peut souhaiter soit la restitution d'images des régions explorées, soit la fourniture d'informations qualitatives ou quantitatives représentatives de ces régions explorées, soit une combinaison de ces diverses fonctions. Dans tous les cas, le choix du dispositif de traitement ne constitue pas une limitation de l'invention.

Dans l'exemple décrit jusqu'à présent, la région explorée est une tranche de milieu dans laquelle la valeur de l'atténuation est sensiblement constante de supposée connue sous la forme d'une valeur moyenne, et le dispositif de calcul 120 calcule la fonction de correction associée à cette valeur moyenne à laquelle est associée la fonction d'atténuation. Cette fonction de correction est en fait la transformée de Fourier inverse de l'inverse de la transformée de Mellin de la fonction d'atténuation.

Dans un mode préférentiel de réalisation, représenté sur la figure 2, le dispositif 110 de transformation de signal échographique comprend, en série, successivement un convertisseur analogique-numérique 111, un circuit 112 de multiplication du signal ainsi numérisé par une rampe de tension linéaire, et un circuit 113 d'interpolation par conversion linéaire-logarithmique d'échelle temporelle. L'origine temporelle du signal en rampe est fixée par un circuit 119 de détermination de référence temporelle, qui tient compte du décalage entre le transducteur et la zone dont on veut l'image ou la représentation, et également de détermination, si nécessaire, de la ou des valeurs d'atténuation du milieu. Connaissant la valeur moyenne de l'atténuation entre le transducteur et la zone dont on veut l'image ou la représentation, cette référence temporelle est en fait le temps de vol entre ce transducteur et cette zone, multiplié par cette valeur moyenne et divisé par la valeur moyenne de l'atténuation dans la région explorée proprement dite. Une connexion reliant le dispositif 120 au circuit 119 du dispositif 110 assure effectivement la transmission de la valeur moyenne de l'atténuation entre le transducteur et la zone explorée. Deux connexions complémentaires visibles sur la figure 1, d'une part entre le dispositif 120 et le circuit 132, d'autre part entre le circuit d'horloge 25 et ce même circuit 132, assurent la fourniture audit circuit 132 de cette valeur moyenne d'atténuation et de la référence temporelle $t_0$. Le circuit d'horloge 115 du convertisseur 111 est à échelle linéaire (les impulsions qu'il délivre sont donc régulièrement espacées) et c'est à partir de ce circuit d'horloge qu'est ici généré le signal en rampe proportionnel au temps. Le circuit d'horloge 25 assure comme on l'a vu plus haut la commande de ce circuit 115, ou des autres circuits d'horloge de l'étage de réception mentionnés dans les diverses variantes de réalisation décrites ci-dessous.

Dans une variante de réalisation représentée sur la figure 3, le dispositif de transformation de signal échographique, référencé 210 cette fois, peut, tout en fonctionnant selon le même principe que le dispositif 110, comprendre les circuits suivants, à savoir un circuit analogique 211 de multiplication du signal échographique par un signal en rampe proportionnel au temps, un convertisseur analogique-numérique 212, dont le circuit d'horloge 215 est également à échelle linéaire et fournit comme précédemment le signal en rampe au circuit de multiplication, puis le circuit 113 comme précédemment. Un circuit de détermination de référence temporelle 219 est associé au circuit d'horloge 215.

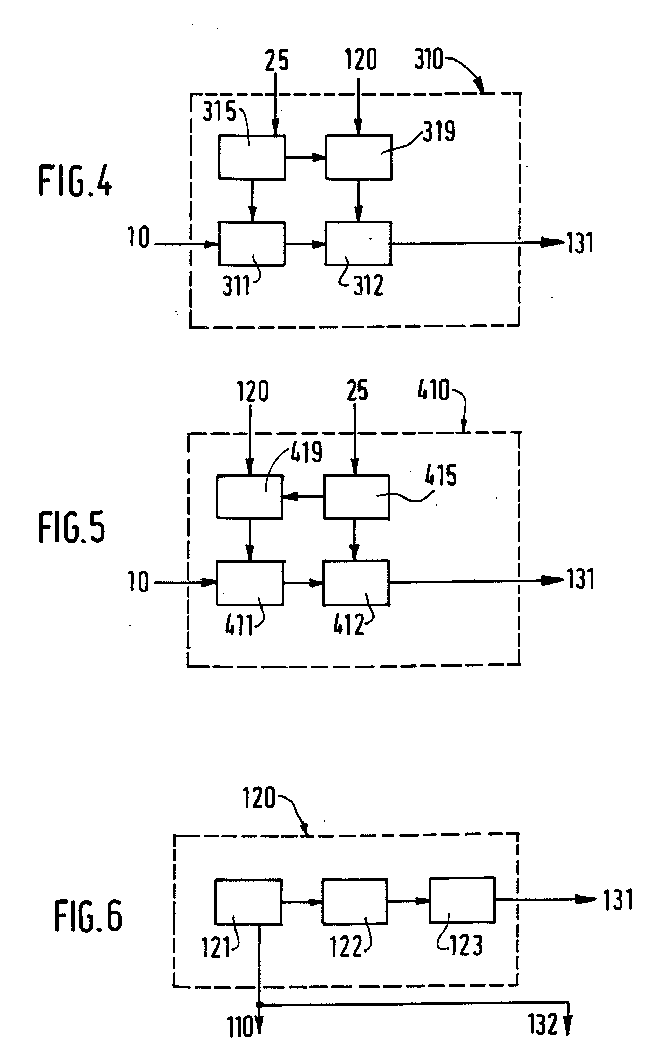

Deux autres variantes de réalisation du dispositif de transformation de signal échographique référencé cette fois 310 ou 410 respectivement sont représentées sur les figures 4 et 5. Le dispositif 310, représenté sur la figure 4, comprend en série un convertisseur analogique-numérique 311 du signal échographique et un circuit 312 de multiplication du signal numérisé par un signal proportionnel à Log(t-$t_0$), $t_0$ étant la référence temporelle déjà mentionnée. Le dispositif 410, représenté sur la figure 5, comprend un circuit 411 de multiplication du signal échographique et un convertisseur analogique-numérique 412 du signal ainsi obtenu. Dans l'un et l'autre cas, le circuit d'horloge, 315 ou 415, du convertisseur est à échelle logarithmique. Comme précédemment, un circuit 319 ou 419 de détermination de référence temporelle est associé au circuit d'horloge 315 ou 415 respectivement.

Le dispositif 120 de calcul de fonction de correction par transformation de fonction d'atténuation associé à ces dispositifs 110, ou 210, ou 310, ou 410 peut également être réalisé de différentes manières, et notamment selon le mode de réalisation de la figure 6. Dans ce cas, il comprend en série d'abord un circuit 121 de prédétermination d'une valeur d'atténuation correspondant à une région du milieu à explorer (par exemple par simple affichage de la valeur moyenne supposée connue plus haut dans la description), et de prédétermination d'une valeur d'atténuation correspondant à la zone entre le transducteur et le milieu exploré (par exemple par affichage également). C'est cette dernière valeur moyenne d'atténuation qui est fournie à la fois au circuit 110 et au circuit 132 (ou aux circuits qui en constituent des variantes). Le dispositif 120 comprend aussi un circuit 122 de calcul de la fonction d'atténuation associée à cette valeur, et un circuit 123 de calcul de la transformée de Fourier inverse de la valeur inverse de la transformée de Mellin de cette fonction.

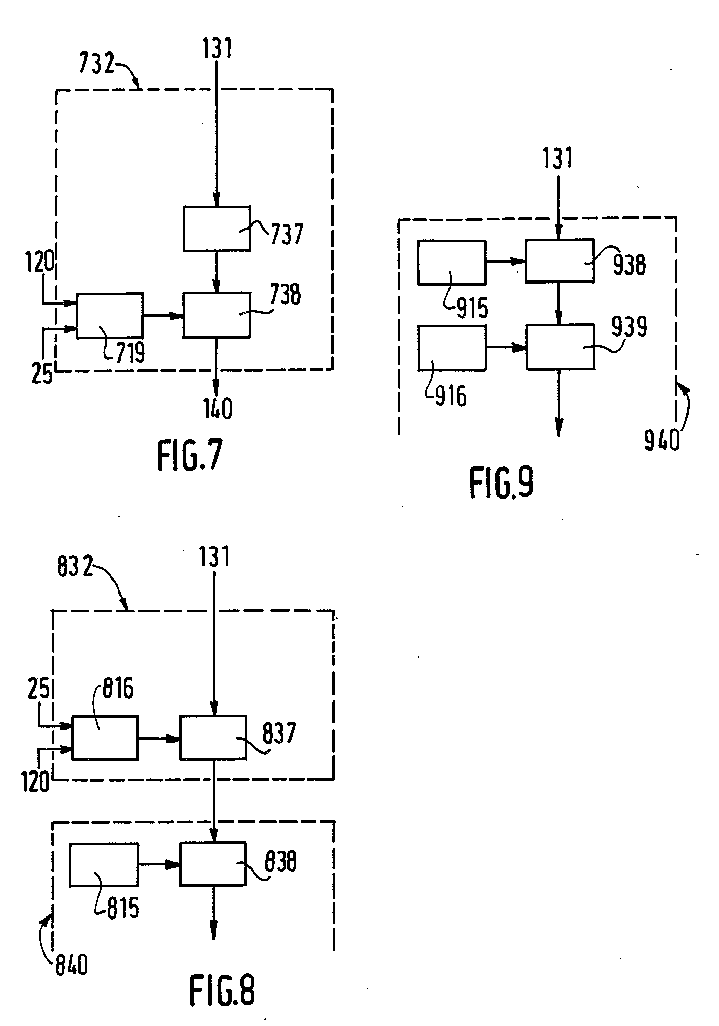

Dans le dispositif de convolution 130 associé au dispositif de transformation de signal échographique (par exemple à l'un des dispositifs 110, 210, 310, 410 décrits précédemment) ainsi qu'au dispositif 120 de calcul de fonction de correction par transformation de fonction d'atténuation, le circuit de transformation par calcul inverse peut être réalisé de la façon suivante. Etant référencé 732, il comprend alors (voir la figure 7) un circuit 737 d'interpolation par conversion logarithmique-linéaire d'échelle temporelle, recevant le signal de sortie du circuit de convolution 131, et un circuit 738 de division du signal ainsi obtenu par un signal en rampe proportionnel au temps. L'origine temporelle de ce signal en rampe est déterminée comme précédemment à l'aide d'un circuit 719 de détermination d'origine temporelle identique au circuit 119.

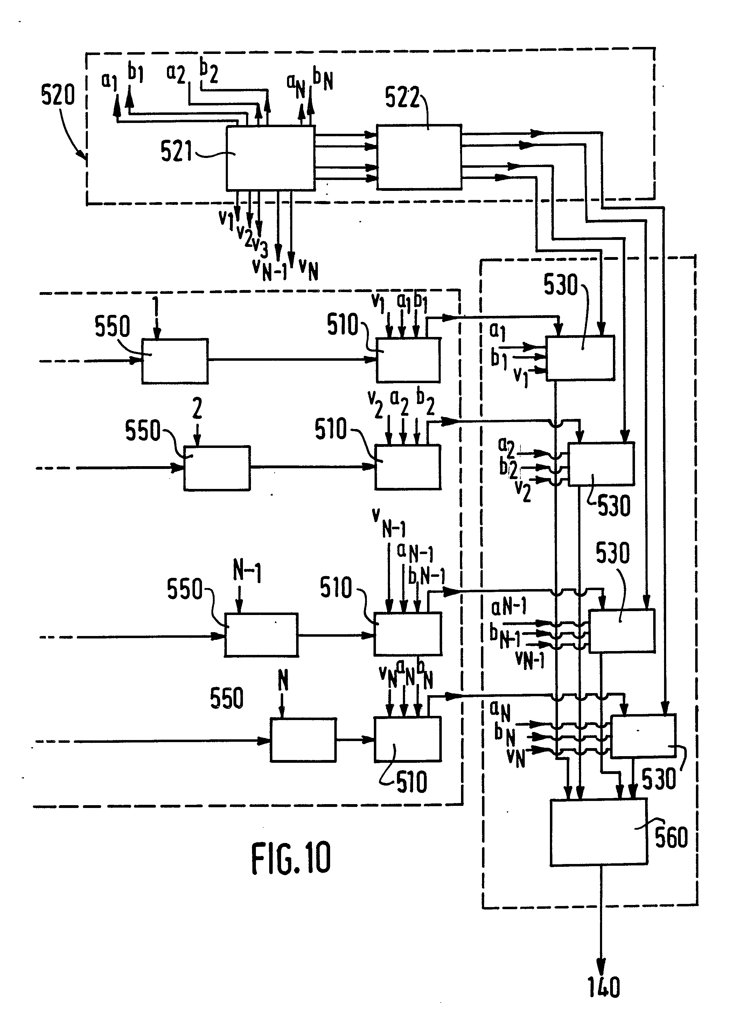

Dans une première variante de réalisation représentée sur la figure 8, ces circuits 737 et 738 peuvent être remplacés par un circuit 837 de division du signal de sortie du circuit 131 par un signal proportionnel à Log (t-$t_0$) et généré par le circuit 816. Le dispositif de restitution référencé 840 comprend alors un convertisseur numérique analogique 838 du signal de sortie de ce circuit de division 837, le circuit d'horloge 815 de ce convertisseur étant à échelle exponentielle. Dans une deuxième variante de réalisation représentée sur la figure 9, on prévoit en sortie du circuit 131 un convertisseur numérique-analogique 938 dont le circuit d'horloge 915 est là encore à échelle exponentielle, suivi d'un circuit 939 de division du signal analogique ainsi obtenu par un signal proportionnel à exp(t-$t_0$) et généré par le circuit 916.

Bien entendu, la présente invention n'est par limitée aux exemples et variantes de réalisation qui viennent d'être décrits et représentés. D'autres variantes peuvent encore être proposées sans pour cela sortir du cadre de l'invention.

En particulier, la figure 10 montre une variante de réalisation 520 du dispositif de calcul de fonction de correction par transformation de fonction d'atténuation et du dispositif de convolution. Ce dispositif 520 comprend un circuit 521 de prédétermination de toute une série de valeurs $a_1$, $a_2$,..., $a_N$ d'atténuation correspondant respectivement, là encore au moins en moyenne, à des régions du milieu à explorer successives le long de l'axe de propagation des ondes ultrasonores, et de prédétermination d'une série de valeurs $b_1$, $b_2$,..., $b_N$ de valeurs d'atténuation moyenne correspondant respectivement aux zones comprises entre le transducteur et les régions du milieu à explorer. Le circuit 521 peut être notamment un des appareils d'examen de milieux par échographie ultrasonore décrits par la demanderesse dans deux précédentes demandes de brevet français FR-A-2 514 910 et FR-A-2 534 707.

Le circuit 521 délivre d'une part un nombre entier N de valeurs d'atténuation des régions à explorer, d'autre part N valeurs d'atténuation moyenne correspondant à la valeur moyenne de l'atténuation entre le transducteur et ces régions à explorer, et enfin N valeurs temporelles $v_1$, $v_2$,..., $v_N$ d'indication des instants correspondant aux limites desdites régions le long de l'axe de propagation concerné. Un circuit 522 calcule les N fonctions de correction d'atténuation respectivement associées à ces N valeurs d'atténuation.

Dans le cas de cette réalisation de la figure 10, l'appareil comprend N portes 550 commandées par les N valeurs temporelles de sortie du circuit de prédétermination 521, chaque porte étant commandée respectivement par l'une de ces valeurs. Les N portes 550 sont suivies en série de N dispositifs 510 de transformation de signal échographique, et ces N voies (550,510) sont en parallèle sur la sortie du transducteur 10 en mode réception (ou sur la sortie du circuit d'interface s'il en est prévu un entre le transducteur, l'étage d'émission et l'étage de réception). L'appareil comprend par ailleurs N dispositifs individuels de traitement 530, suivis d'un additionneur 560 des sorties des dispositifs 530. Chaque dispositif 510 reçoit une valeur temporelle $v_1$ à $v_N$ et deux valeurs d'atténuation $a_1$ à $a_N$ et $b_1$ à $b_N$, de même que chaque dispositif 530. La sortie de l'additionneur 560 est reliée à l'entrée du dispositif de traitement 140 déjà prévu dans les modes de réalisation précédents.

## Revendications

1. Appareil d'examen de milieux de notamment de tissus biologiques par échographie ultrasonore, comprenant au moins un transducteur ultrasonore associé à un étage d'émission répétée d'ondes ultrasonores vers le milieu à explorer et à un étage de réception des échos renvoyés vers le transducteur par les obstacles rencontrés par ces ondes dans ledit milieu, ledit appareil étant caractérisé en ce que l'étage de réception comprend lui-même :

(A) un dispositif de transformation de signal échographique, par calcul de la transformée de Fourier inverse de la transformée de Mellin de ce signal ;

(B) un dispositif de calcul de fonction de correction par transformation de fonction d'atténuation, opérant par calcul de la transformée de Fourier inverse de la valeur inverse de la transformée de Mellin de la fonction d'atténuation associée à une valeur d'atténuation correspondant à au moins une région du milieu à explorer ;

(C) un dispositif de convolution composé en série :
(1) d'un circuit de convolution des sorties respectives des dispositifs de transformation prévus en (A) et (B) ;
(2) d'un circuit de transformation du signal ainsi obtenu par calcul inverse du calcul effectué par le dispositif de transformation de signal échographique ;

(D) un dispositif de traitement du signal de sortie de ce dispositif de convolution, pour la restitution d'images et/ou d'informations représentatives de ladite région explorée.

2. Appareil selon la revendication 1, caractérisé en ce que le dispositif de transformation de signal échographique comprend en série successivement

(1) un convertisseur analogique-numérique du signal échographique, dont le circuit d'horloge est à échelle linéaire ;
(2) un circuit de multiplication du signal numérisé par un signal en rampe proportionnel au temps ;
(3) un circuit d'interpolation par conversion linéaire-logarithmique d'échelle temporelle ;

3. Appareil selon la revendication 1, caractérisé en ce que le dispositif de transformation de signal échographique comprend en série successivement

(1) un circuit de multiplication du signal échographique par un signal en rampe proportionnel au temps ;
(2) un convertisseur analogique-numérique du signal ainsi obtenu, dont le circuit d'horloge est à échelle linéaire ;
(3) un circuit d'interpolation par conversion linéaire-logarithmique d'échelle temporelle.

4. Appareil selon la revendication 1, caractérisé en ce que le dispositif de transformation de signal échographique comprend en série successivement

(1) un convertisseur analogique-numérique du signal échographique, dont le circuit d'horloge est à échelle logarithmique ;
(2) un circuit de multiplication du signal numérisé par un signal proportionnel à Log($t-t_0$), où $t_0$ est une référence temporelle tenant compte de la zone qui sépare le transducteur de la zone dont on veut l'image ou la représentation et de la ou des valeurs d'atténuation du milieu dans cette zone de séparation.

5. Appareil selon la revendication 1, caractérisé en ce que le dispositif de transformation du signal échographique comprend en série successivement

(1) un circuit de multiplication du signal échographique par un signal en rampe proportionnel au temps ;

(2) un convertisseur analogique-numérique du signal ainsi obtenu, dont le circuit d'horloge est à échelle logarithmique.

6. Appareil selon l'une des revendications 4 et 5, caractérisé en ce que le dispositif de calcul de fonction de correction par transformation de fonction d'atténuation comprend en série successivement :

(1) un circuit de prédétermination d'une valeur d'atténuation correspondant au moins en moyenne à une région du milieu à explorer ;

(2) un circuit de calcul de la fonction d'atténuation associée à cette valeur ;

(3) un circuit de calcul de la transformée de Mellin de cette fonction d'atténuation.

7. Appareil selon la revendication 6, caractérisé en ce que le circuit de transformation du dispositif de convolution comprend :

(1) un circuit d'interpolation par conversion logarithmique-linéaire d'échelle temporelle ;

(2) un circuit de division du signal ainsi obtenu par un signal en rampe proportionnel au temps.

8. Appareil selon la revendication 6, caractérisé en ce que le circuit de transformation du dispositif de convolution comprend un circuit de division du signal ainsi obtenu par un signal proportionnel à $\text{Log}(t-t_0)$, et en ce que le dispositif de traitement comprend un convertisseur numérique-analogique du signal de sortie du circuit de division, le circuit d'horloge de ce convertisseur étant à échelle exponentielle.

9. Appareil selon la revendication 6, caractérisé en le dispositif de traitement comprend :

(1) un convertisseur numérique-analogique du signal de sortie du dispositif de convolution, le circuit d'horloge de ce convertisseur étant à échelle exponentielle ;

(2) un circuit de division du signal analogique ainsi obtenu par un signal proportionnel à $\exp(t-t_0)$.

10. Appareil selon l'une des revendications 7 à 9, caractérisé en ce que le dispositif de calcul de fonction de correction par transformation de fonction d'atténuation comprend :

(1) un circuit de prédétermination d'une série de valeurs d'atténuation correspondant respectivement, au moins en moyenne, à des régions du milieu à explorer successives le long de l'axe de propagation des ondes ultrasonores, ledit circuit délivrant d'une part un nombre entier N de valeurs d'atténuation des régions à explorer, d'autre part N valeurs d'atténuation moyenne correspondant à la valeur moyenne de l'atténuation entre le transducteur et ces régions à explorer, enfin N valeurs temporelles d'indication des instants correspondant aux limites desdites régions à explorer le long de l'axe de propagation ;

(2) un circuit de calcul des N fonctions de correction d'atténuation respectivement associée auxdites valeurs d'atténuation ;

en ce que le dispositif de transformation de signal échographique comprend N voies en parallèle comprenant elles-mêmes en série :

(1) N portes commandées par lesdites valeurs temporelles de sortie du circuit de prédétermination ;

(2) N dispositifs individuels de transformation de signal échographique ;

et en ce qu'il est également prévu :

(1) N dispositifs de convolution ;

(2) un additionneur des sorties de ces N dispositifs de convolution, la sortie de cet additionneur étant reliée à l'entrée du dispositif de traitement.

FIG.1

FIG.2

FIG.3

FIG.4

25    120    310

315

319

10    131

311    312

FIG.5

120    25    410

419    415

10    131

411    412

FIG.6

120

131

121    122    123

110    132

FIG.7

FIG.9

FIG.8

FIG.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,A | EP-A-0 202 694 (L.E.P.) <br> * En entier * | 1-10 | G 01 S 15/89 <br> G 01 S 7/52 |
| A | US-A-3 805 596 (C.N. KLAHR) <br> * Colonne 19, ligne 20 - colonne 20, ligne 63; colonne 29, ligne 1 - colonne 31, ligne 31; figure 5 * | 1 | |
| A,D | ACOUSTICAL IMAGING, vol. 12, 1982, pages 413-422, New York, US; M. AUPHAN et al.: "Tissue ultrasonic attenuation well modelized by a mellin-convolution" <br> * En entier * | 1 | |
| A | EP-A-0 043 158 (PHILIPS) <br> * Page 12, ligne 3 - page 17, ligne 7; figures 3,4 * | 1 | DOMAINES TECHNIQUES RECHERCHES (Int. Cl.4) <br><br> G 01 S |

Le présent rapport de recherche a été établi pour toutes les revendications

| Lieu de la recherche | Date d'achèvement de la recherche | Examinateur |
|---|---|---|
| LA HAYE | 04-09-1987 | VAN WEEL E.J.G. |